# EUROPÄISCHE PATENTSCHRIFT

(11) **EP 3 330 677 B1**
(45) Veröffentlichungstag und Bekanntmachung des Hinweises auf die Patenterteilung: **28.08.2019**
(21) Anmeldenummer: 16202172.9
(22) Anmeldetag: 05.12.2016
(51) Int. Cl.: G01D 11/24

(54) **SCHUTZABDECKUNG FÜR EINEN SENSOR, SOWIE MESSEINRICHTUNG MIT EINEM SENSOR MIT SCHUTZABDECKUNG**
PROTECTING COVER FOR A SENSOR AND MEASURING DEVICE WITH A SENSOR WITH A PROTECTING COVER
PROTECTION POUR UN CAPTEUR ET APPAREIL DE MESURE AVEC UN CAPTEUR AYANT UN PROTECTION

(43) Veröffentlichungstag der Anmeldung: 06.06.2018
(73) Patentinhaber: Hch. Kündig & Cie. AG, 8630 Rüti/ZH (CH)
(72) Erfinder: Pfenninger, Thomas, 8344 Bäretswil (CH)
(74) Vertreter: Intellectual Property Services GmbH

(56) Entgegenhaltungen:
- EP-A1- 1 500 938
- EP-A1- 1 681 531
- EP-A1- 1 918 672
- US-A- 6 038 027

## Beschreibung

Die Erfindung betrifft eine Schutzabdeckung zum Schutz eines Sensors, insbesondere kapazitiver Dickensensor für die Bestimmung der Dicke einer Kunststofffolie, im Speziellen extrudierte Kunststofffolie, sowie eine Messeinrichtung umfassend eine Schutzabdeckung und einen Sensor gemäss dem Oberbegriff der unabhängigen Ansprüche 1 und 15.

Dickenmesssysteme für extrudierte Kunststofffolien sind aus dem Stand der Technik wohl bekannt. Zu den verwendeten Messverfahren gehören z.B. optische, radiometrische, induktive und kapazitive Messverfahren.

Je nach produzierten Folien, z.B. Einschicht- oder häufig auch mehrlagige Mehrschichtfolien, oder in Abhängigkeit von den für die Folien verwendeten Materialien sind heute verschiedene Messverfahren, insbesondere berührende, berührungsarme oder berührungslose Dickenmesssysteme im Einsatz.

Vor allem bei den berührenden Dickenmesssystemen ist die Standzeit der Sensoroberfläche dabei oft stark vom produzierten Folienmaterial abhängig. Auch können Partikel aller Art und Herkunft in möglicherweise vorhandene Öffnungen des Sensorkopfes eindringen und diese verschmutzen oder verstopfen. Ein weiteres Problem ist die Reibung zwischen Sensorkopf und Folienmaterial. Eine z.B. strukturierte Chromoberfläche des Sensorkopfes wird mit zunehmender Nutzungsdauer durch die Berührung mit der Kunststofffolie flach poliert und beginnt damit auch vermehrt an der Folie zu haften.

Ein weiteres Problem sind statische Aufladungen, die durch Reibungseffekte zwischen Sensorkopf und der sich relativ schnell bewegender Folie im Betriebszustand entstehen können. Dadurch können sich je nach verwendetem Messprozess (berührende, berührungsarme oder berührungslose Dickenmesssysteme) mehr oder weniger viele elektrische Ladungen am Sensorkopf ansammeln und je nach Messverfahren (optische, radiometrische, induktive, kapazitive, oder andere Messverfahren) die Messergebnisse mehr oder weniger stark stören bzw. verfälschen und im schlimmsten Fall die Messeinrichtung mit Sensor, Messverstärkern usw. sogar beschädigen oder gänzlich unbrauchbar machen. Das ist unter anderem ein entscheidender Nachteil des Messsystems gemäss US 5,121,068.

Bei den berührungsarmen Dickenmesssystemen ist es bekannt die Sensoroberfläche zum Beispiel mit PTFE (Teflon TM) zu beschichten um die Reibung möglichst zu minimieren. Werden diese Sensoren aber bei abrasiven Folien eingesetzt, ist die PTFE-Schicht in Kürze abgeschliffen. Die z.B. Plasma beschichteten Oberflächen haben dagegen eine längere Standzeit, aber auch einen höheren Reibungskoeffizienten. Zu den berührungsarmen Dickenmesssystemen werden auch die rollenden Sensoren, wie beispielweise in der EP 1 182 423 A1 offenbart, gezählt. Diese sind allerdings technisch aufwendig zu realisieren und leider oft auch störanfällig. EP 1 681 531 A1 offenbart eine weitere Schutzabdeckung für einen Sensor, der die Dicke einer Kunststofffolie bemisst.

Bei den berührungslosen Systemen wird mehrheitlich ein dünnes Luftpolster zwischen Sensoroberfläche und Folie erzeugt, wie etwa in der GB 1 436 698 gezeigt. Je nach konkretem Messverfahren, muss dann allerdings zur genauen Foliendickenmessung die Dicke des Luftpolsters konstant gehalten und/oder gemessen werden. Diese Messsysteme sind in der Herstellung daher oft aufwendiger, in der Anwendung sensibler und wegen dem teilweise grossen Bedarf an gereinigter Prozessluft im Produktionseinsatz auch teuer und damit unwirtschaftlich. Berührt die Folie trotz Luftpolster, z.B. bei einem Ausfall der Druckluft, bei starken Flatterbewegungen der Folie oder bei Verstopfung der Austrittsöffnungen oder Poren die Sensoroberfläche, ist diese ebenfalls einer Reibung ausgesetzt, wodurch die Sensoroberfläche geschädigt werden kann. Ausserdem besteht auch hier das Problem der Ansammlung von elektrischen Ladungen am Sensorkopf, die durch die Reibung mit der Luft zwischen Sensorkopf und sich bewegender Folie entstehen bzw. vermittelt werden.

Die Aufgabe der Erfindung ist es daher, die aus dem Stand der Technik bekannten Probleme zu vermeiden bzw. zumindest zu minimieren und insbesondere das Eingangs beschriebene reibungsbedingte Flachpolieren bzw. Abschleifen möglichst zu verhindern oder zu minimieren und somit die Standzeit solcher Dickensensoren bzw. der entsprechenden Messvorrichtungen für die Dicke der Plastikfolien massgeblich zu verlängern. Darüberhinaus soll gleichzeitig das Ansammeln von elektrischen Ladungen am Sensorkopf weitgehend verhindert bzw. im Wesentlichen vollständig verhindert werden, so dass die Messergebnisse nicht beeinflusst oder verfälscht werden und eine Beschädigung der Komponenten der Messeinrichtung wirksam verhindert wird.

Die diese Aufgaben lösenden Gegenstände der Erfindung sind durch die Merkmale der unabhängigen Ansprüche 1 und 15 gekennzeichnet.

Die abhängigen Ansprüche beziehen sich auf besonders vorteilhafte Ausführungsformen der Erfindung.

Die Erfindung betrifft somit eine Schutzabdeckung zum Schutz eines Sensors für die Bestimmung der Dicke einer Kunststofffolie, wobei die Schutzabdeckung eine Sensorsektion zur Aufnahme und Positionierung des Sensors unter einer Kontaktfläche der Schutzabdeckung umfasst und die Kontaktfläche derart an der Schutzabdeckung vorgesehen ist, dass im Betriebszustand mittels des Sensors die Dicke der Kunststofffolie zumindest durch einen Teil der Kontaktfläche hindurch bestimmbar ist. Erfindungsgemäss umfasst die Kontaktfläche eine elektrisch isolierende Messfläche und eine elektrisch leitende Ableitfläche, wobei die Messfläche zumindest einen Teil der Sensorsektion überdeckt.

Die erfindungsgemässe Aufgabe wird somit im Speziellen durch eine Schutzabdeckung, z.B. in Form einer Schutzkappe gelöst, deren Kontaktfläche der im Betriebs- und Messzustand vorbeiziehenden Kunststofffolie zugewandten Seite als abriebfeste, direkte oder indirekte Berührungsfläche dient, je nachdem ob es sich bei dem Messverfahren um eine berührende, berührungsarme oder berührungslose Messung handelt. Dabei ist die Schutzabdeckung bevorzugt aus einem keramischen Material, vorzugsweise z.B. aus einer Sinterkeramik oder Glaskeramik oder einem anderen geeigneten mechanisch widerstandsfähigen Material hergestellt, wobei der Sensor im Betriebszustand durch die Kontaktfläche hindurch die Dicke der Kunststofffolie misst.

Dadurch, dass ein Teil der Kontaktfläche als elektrisch leitende Ableitfläche zum Ableiten von elektrischen Ladungen ausgestaltet ist, wird verhindert, dass sich für die Messapparatur und deren Komponenten schädliche und die Messung störende elektrische Ladungen an der Schutzabdeckung ansammeln, da diese über die Ableitfläche, die zum Beispiel in an sich bekannter Weise geeignet elektrisch geerdet sein kann, zuverlässig abgeleitet werden. Dadurch wird nicht nur verhindert, dass sich elektrische Ladungen an der Schutzabdeckung ablagern, sondern es wird gleichzeitig verhindert, dass sich elektrische Ladungen am Sensor direkt anlagern, da diese durch die Ableitfläche der Erfindung abgeleitet werden, bevor die elektrischen Ladungen den Sensor erreichen können.

Anderseits ist die Messfläche, bzw. der Messkörper, auf dem die Messfläche ausgebildet ist, aus einem elektrisch isolierenden Material gefertigt und / oder mit einem solchen beschichtet, wobei die Aufnahme der Messwerte zur Ermittlung der Dicke der Kunststofffolie im wesentlichen im Bereich der Messfläche erfolgt, da diese zumindest einen Teil der Sensorsektion überdeckt, in welchen der Sensor zur Aufnahme der Messwerte angeordnet ist. Dazu ist die elektrisch isolierende Messfläche besonders bevorzugt eine zentrale elektrisch isolierende Messfläche und die elektrisch leitende Ableitfläche ist besonders vorteilhaft eine in Bezug auf die zentrale elektrisch isolierende Messfläche eine periphere elektrisch leitende Ableitfläche, die die elektrisch isolierende Messfläche z.B. umschliessen kann oder in anderer Weise die Messfläche vor der Ansammlung schädlicher elektrischer Ladungen schützt.

Zusätzlich schützt die Schutzabdeckung den Sensor auch gegen schädliche mechanische Einwirkungen. Dazu umfasst eine erfindungsgemässe Schutzabdeckung in der Regel einen Grundkörper aus einem Basismaterial und einen die elektrisch isolierende Messfläche umgebenden Messkörper aus einem Messmaterial, wobei zum Schutz des Sensors gegen äussere Einwirkungen, insbesondere gegen äussere mechanische oder chemische Einwirkungen im Betriebszustand, d.h. vor allem zum Schutz des Sensors gegen einen abrasiven Verschleiss und / oder gegen eine Verschmutzung, die Schutzabdeckung vorteilhaft ein widerstandsfähiges Schutzmaterial umfasst, insbesondere ein keramisches Material, vorzugsweise eine Sinterkeramik oder Glaskeramik, oder Teflon, oder ein Metamaterial umfasst.

Das heisst, durch die Erfindung wird eine Schutzabdeckung sowie eine Messeinrichtung zum Messen der Dicke einer relativ zur Messvorrichtung bewegten Kunststofffolien, also zur Messung der Dicke einer Plastikfolie während der Produktion bereitgestellt, bei welcher die normalerweise oder möglicherweise die Folie berührende Oberfläche eine auswechselbare, abriebfeste Schutzabdeckung, z.B. in Form einer Schutzkappe aus einem bevorzugt keramischen Material ist, hinter dem sich der Sensor zur Erfassung der Messwerte befindet.

Insbesondere kann die erfindungsgemässe Schutzkappe in einem speziellen Ausführungsbeispiel ausgewechselt werden, ohne dass eine neue Eichung des Sensors nötig ist, da der Sensor in der Schutzabdeckung so vorgesehen ist und verschiedene Schutzabdeckung derart präzise gleichartig gefertigt sind, dass reproduzierbare Messungen auch nach einem Austausch der Schutzkappe garantiert werden können.

Bei einem speziellen Ausführungsbeispiel der vorliegenden Erfindung umfasst die Kontaktfläche, zumindest Abschnittsweise besonders bevorzugt keine Oberflächenbeschichtung. Eine derartige einfache erfindungsgemässe Lösung ist vor allem dann vorteilhaft möglich, wenn die Kontaktfläche als solches bzw. die Schutzabdeckung, also die Schutzkappe als solches aus einem genügend abrasiv resistenten und / oder Schmutz abweisenden Material hergestellt ist, so dass auf eine zusätzliche Beschichtung verzichtet werden kann und der Grundkörper bereits aus einem elektrisch leitenden Material gefertigt ist und / oder der Messkörper bereits aus einem elektrisch isolierenden Material gefertigt ist.

In der Praxis umfasst die Kontaktfläche bzw. die Schutzabdeckung somit in einem für die Erfindung wichtigen Ausführungsbeispiel ein gegen den abrasiven Verschleiss und / oder Verschmutzung widerstandsfähiges Schutzmaterial, insbesondere eine Keramik, vorzugsweise eine Sinterkeramik oder eine Glaskeramik, oder beispielweise Teflon oder ein anderes geeignetes Schutzmaterial. Dabei hat das Schutzmaterial insbesondere eine kleine relative Permittivität. Dabei bedeutet in der Praxis eine kleine Permittivität z.B., dass die Permittivität, also die relative Dielektrizitätskonstante des Schutzmaterials nicht wesentlich grösser und bevorzugt kleiner ist als die Permittivität der zu messenden Kunststofffolie, so dass die unweigerlich zusätzlich gemessene Permittivität des Schutzmaterials in technischem Sinne die Messung der Permittivität der Kunststofffolie höchstens in vernachlässigbarer Grösse, bzw. in kontrollierbarer und nachvollziehbarer Grösse beeinflusst. In der Praxis kann das zum Beispiel bedeuten, dass die relative Permittivität z.B. kleiner als 10, bevorzugt kleiner als 6, besonders bevorzugt zwischen 1 und 4 liegt. Besonders bevorzugt ist dabei die relative Permittivität des Schutzmaterials bzw. der Schutzabdeckung insgesamt im Temperaturbereich von 20°C bis mindestens 100° C, bevorzugt bis 130°C, im Speziellen bis ca. 200°C im wesentlichen temperaturunabhängig, so dass keine negativen Verfälschungen der Messergebnisse an den Kunststofffolien zu befürchten sind. Die Angabe "in einem Temperaturbereich im wesentlichen temperaturunabhängig" bedeutet dabei, dass in dem entsprechenden Temperaturbereich die Permittivität sich höchstens um 10%, bevorzugt um weniger als 2%, besonders bevorzugt im wesentlichen nicht messbar ändert, d.h. sich z.B. um höchstens nicht messbare 0,1% ändert.

In speziellen Fällen kann der Sensor natürlich auch z.B. ein optischer Sensor oder ein radiometrischer Sensor sein, wobei die Schutzkappe selbstverständlich für die entsprechende Messmethode transparent sein muss.

Vorteilhaft kann z.B. zur Erzeugung eines möglichst gleichmässigen Anpressdrucks zwischen der Kontaktfläche und der Kunststofffolie die Kontaktfläche in Bezug auf die Schutzabdeckung zumindest abschnittsweise konvex, bevorzugt kugelförmig ausgestaltet sein, und / oder die Kontaktfläche, insbesondere die zentrale Messfläche kann einen kleineren, gleichen oder grösseren Krümmungsradius als die Ableitfläche, insbesondere periphere Ableitfläche aufweisen. Im Speziellen kann die Kontaktfläche, insbesondere die Messfläche auch eine im wesentlichen ebene Geometrie haben oder je nach Erfordernis auch in anderer Form geeignet geometrisch ausgestaltet sein.

Dabei kann in der Praxis bei einem besonders bevorzugten Ausführungsbeispiel zur Minimierung eines Reibungswiderstands die Kontaktfläche zumindest in einem Berührungsbereich eine strukturierte Oberfläche aufweisen, zum Beispiel eine Strukturierung analog zu der Oberfläche einer Orange, wodurch die Reibungskräfte zwischen Kunststofffolie und Kontaktfläche auf ein vertretbares Mass reduziert werden können.

Alternativ oder zusätzlich kann zur Erzeugung einer schmutzabstossenden Oberfläche die Berührungsfläche auch Nanopartikel umfassen, die bevorzugt auf die Kontaktfläche aufgebracht und / oder eingelagert sind.

Dabei kann die Schutzabdeckung, also im Speziellen die Schutzkappe, zum Beispiel zum Austausch und / oder zur Reinigung und / oder zur Sterilisierung mit dem Sensor und / oder mit einem Sensorgehäuse, in dem der Sensor angeordnet ist, lösbar verbunden sein. Dadurch kann die Schutzabdeckung zum Beispiel zur Reinigung oder beim Austausch gegen eine neue Schutzabdeckung besonders einfach entfernt und wieder angebracht werden, wobei bevorzugt sicherstellt wird, dass die Schutzabdeckung immer wieder völlig identisch am Sensor bzw. am Sensorgehäuse positioniert wird, so dass selbst bei einem Austausch der Schutzabdeckung eine Neukalibrierung der Messvorrichtung nicht notwendig ist und somit entfallen kann. Die Befestigung der Schutzabdeckung am Sensor kann dabei in an sich bekannter Weise über einen Klemmmechanismus, und / oder mittels Schrauben und / oder Stifte, und / oder mittels eines Bajonettanschlusses, Schnappmechanismus, Ratschenmechanismus oder in jeder anderen geeigneten, an sich bekannten lösbaren Art der Verbindung erfolgen.

Die Sensorsektion zur Aufnahme des Sensors kann dabei zum Beispiel in Form einer Ausnehmung geeigneter geometrischer Ausprägung im Grundkörper vorgesehen sein, insbesondere in Form eines einseitig geschlossenen Sacklochs oder in Form eines den Grundkörper durchlaufenden zweiseitig offenen Kanals, im Speziellen als Durchgangsbohrung ausgebildet sein. In ganz einfachen Fällen kann die Sensorsektion auch einfach durch eine plane oder anders ausgestaltete Unterseite der Schutzabdeckung gebildet sein, an die der Sensor in an sich bekannter Weise mit geeigneten Befestigungsmitteln befestigt werden kann.

Dabei kann der Messkörper beispielweise als separates Einsatzstück in der Sensorsektion, insbesondere als Einsatzstück am oder im durchlaufenden zweiseitigen offenen Kanal ausgebildet sein und / oder die elektrisch isolierende zentrale Messfläche kann unter anderem in Form einer elektrisch isolierenden Beschichtung auf dem Messkörper ausgebildet sein. Die elektrisch leitende Ableitfläche kann dabei in einem bevorzugten Ausführungsbeispiel analog in Form einer elektrisch leitenden Beschichtung auf dem Grundkörper ausgebildet sein.

In der Praxis haben dabei die Schutzabdeckung insgesamt und / oder das Basismaterial und / oder das Messmaterial des Messkörpers und / oder die elektrisch isolierende Beschichtung und / oder die elektrisch leitende Beschichtung und / oder das keramische Material hat eine relative Permittivität von kleiner als 10, bevorzugt von kleiner als 6, besonders bevorzugt zwischen 1 und 4, wobei die relative Permittivität im Temperaturbereich von 20°C bis mindestens 100°C, in Speziellen bis ca. 200°C im wesentlichen temperaturunabhängig ist.

Zur Minimierung eines Reibungswiderstands weist die Kontaktfläche zumindest in einem Berührungsbereich der Kontaktfläche eine strukturierte Oberfläche, die vorzugsweise eine kugelförmige Feinstruktur mit einer Rauheit in der Grössenordnung von Ra = 0.4 µm bis Ra = 1.2 µm aufweist.

Zum Austausch und / oder zur Reinigung und / oder zur Sterilisierung kann die Schutzabdeckung darüber hinaus derart ausgestaltet sein, dass die Schutzabdeckung wie bereits erwähnt mit dem Sensor lösbar verbindbar ist, wobei nach einem Austausch der Schutzabdeckung eine Neukalibrierung der Messvorrichtung bevorzugt vermeidbar ist. Zusätzlich kann zur Erzeugung einer schmutzabstossenden Oberfläche die Kontaktfläche auch Nanopartikel umfassen die bevorzugt auf die Kontaktfläche aufgebracht und / oder eingelagert sind.

Des weiteren betrifft die Erfindung eine an sich bekannte Messeinrichtung, insbesondere zur Dickenmessung an einer Kunststofffolie, wobei die Messeinrichtung mindestens eine Schutzabdeckung und einen Sensor der vorliegenden Erfindung umfasst.

Im Folgenden wird die Erfindung an Hand der schematischen Zeichnung näher erläutert. Es zeigt:
- Fig. 1: ein besonders bevorzugtes Ausführungsbeispiel einer erfindungsgemässen Messeinrichtung mit Sensor und Schutzabdeckung;
- Fig. 2a: eine Ansicht der Kontaktfläche einer erfindungsgemässen Schutzabdeckung;
- Fig. 2b: eine Ansicht auf die Sensorsektion der Schutzabdeckung gemässFig. 2a.

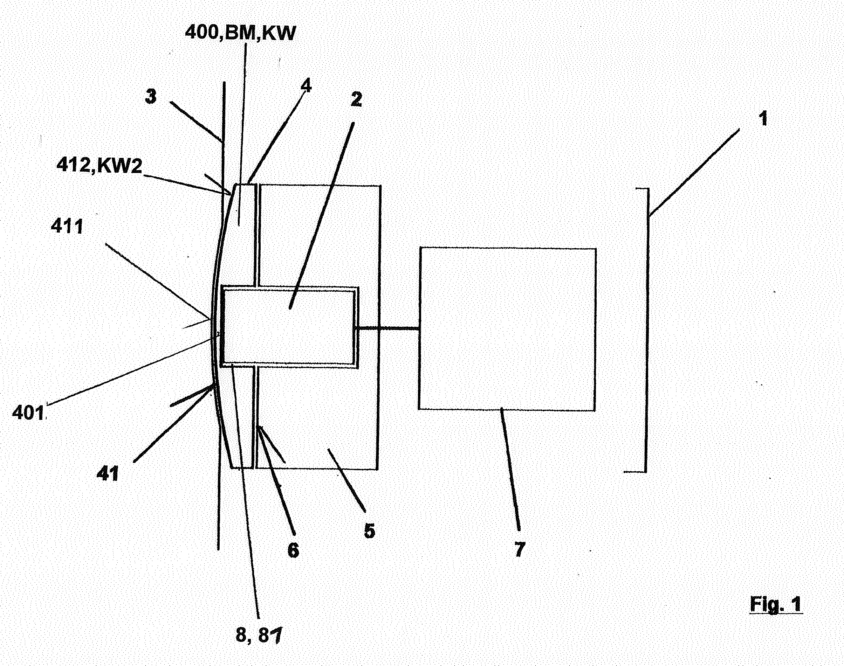

In Fig. 1 ist schematisch ein besonders bevorzugtes Ausführungsbeispiel einer erfindungsgemäßen Messvorrichtung mit Schutzkappe dargestellt, welche Messvorrichtung im Folgenden gesamthaft mit dem Bezugszeichen 1 bezeichnet wird.

Die erfindungsgemässe Messvorrichtung 1 der Fig. 1 umfasst einen Sensor 2, insbesondere kapazitiver Dickensensor zur Bestimmung der Dicke einer Kunststofffolie 3, insbesondere extrudierte Kunststofffolie 3, die im Beispiel der Fig. 1 mittels eines nicht näher dargestellten, an sich bekannten Transportmechanismus an einer Kontaktfläche 41 im Produktionsprozess zur kontinuierlichen Messung der Foliendicke kontinuierlich am Sensor 2 bzw. an der Schutzabdeckung 4 des Sensors 2 vorbeigeführt wird.

Der Sensor 2 ist in der Sensorsektion 8, 81 vorgesehen, die hier als Sackloch 81 ausgebildet ist, wobei der Sensor 2 zur Auswertung der Messdaten in an sich bekannter Weise mit einer geeigneten Mess- und Auswerteelektronik 7 signalverbunden ist.

Dabei ist die als Schutzfläche ausgebildete Kontaktfläche 41 einerseits zum Schutz des Sensors 2 gegen einen abrasiven Verschleiss und / oder gegen eine Verschmutzung vorgesehen; andererseits umfasst die Kontaktfläche 41 neben einer elektrisch isolierenden Messfläche 411 auch eine elektrisch leitende Ableitfläche 412, die es gestattet, schädliche elektrische Ladungen von der Kontaktfläche abzuführen. Gemäss der vorliegenden Erfindung ist die Kontaktfläche 41 derart an einer am Sensor 2 angeordneten Schutzabdeckung 4 vorgesehen, insbesondere in Form einer Schutzkappe vorgesehen, dass mittels des Sensors 2 die Dicke der Kunststofffolie 3 im Betriebszustand im Wesentlichen durch die Messfläche 411 hindurch bestimmbar ist.

Bei dem speziellen Ausführungsbeispiel der Fig. 1 ist auf der Kontaktfläche 41 der Schutzabdeckung 4 ein gegen den abrasiven Verschleiss und Verschmutzung widerstandsfähiges Schutzmaterial, im vorliegenden Fall eine Keramik, vorzugsweise eine Sinterkeramik oder eine Glaskeramik, vorgesehen, wobei das Schutzmaterial eine relative Permittivität im Bereich zwischen 1 und 10 hat und die relative Permittivität im Temperaturbereich von 20°C bis mindestens 200°C im wesentlichen temperaturunabhängig ist.

Dabei ist im peripheren Bereich der Kontaktfläche 41 die elektrisch leitende Ableitfläche 412 durch eine elektrisch leitende Beschichtung aus einer elektrisch leitenden Keramik KW2 realisiert, die auf dem Basismaterial BM des Grundkörpers 400 mit einem an sich bekannten Beschichtungsverfahren aufgebracht wurde. Das Basismaterial BM des Grundkörpers 400 besteht dabei das aus einer elektrisch isolierenden Keramik KW. Der Messkörper 401 ist im vorliegenden Ausführungsbeispiel der Fig. 1 ein integraler Bestandteil des Grundkörpers 400 und besteht daher aus derselben elektrisch isolierenden Keramik KW wie der Grundkörper 400.

Wie der Fig. 1 deutlich zu entnehmen ist, ist zur Erzeugung eines möglichst gleichmässigen Anpressdrucks zwischen der Kontaktfläche 41 und der Kunststofffolie 3, die Kontaktfläche 41 in Bezug auf die Schutzabdeckung 4 konvex, hier in Form eines Abschnitts einer Kugeloberfläche kugelförmig ausgestaltet, wobei zur Minimierung eines Reibungswiderstands die Kontaktfläche 41 in einem Berührungsbereich zwischen Kunststofffolie 3 und Kontaktfläche 41, die Kontaktfläche 41 eine strukturierte Oberfläche aufweist. Die Schutzabdeckung 4, die in Fig. 1 eine Schutzkappe ist, ist zum Austausch und / oder zur Reinigung und / oder zur Sterilisierung mit dem Sensor 2 bzw. mit einem Sensorgehäuse 5, in welchem der Sensor 2 angeordnet ist, im Bereich einer Referenzfläche 6 lösbar verbunden.

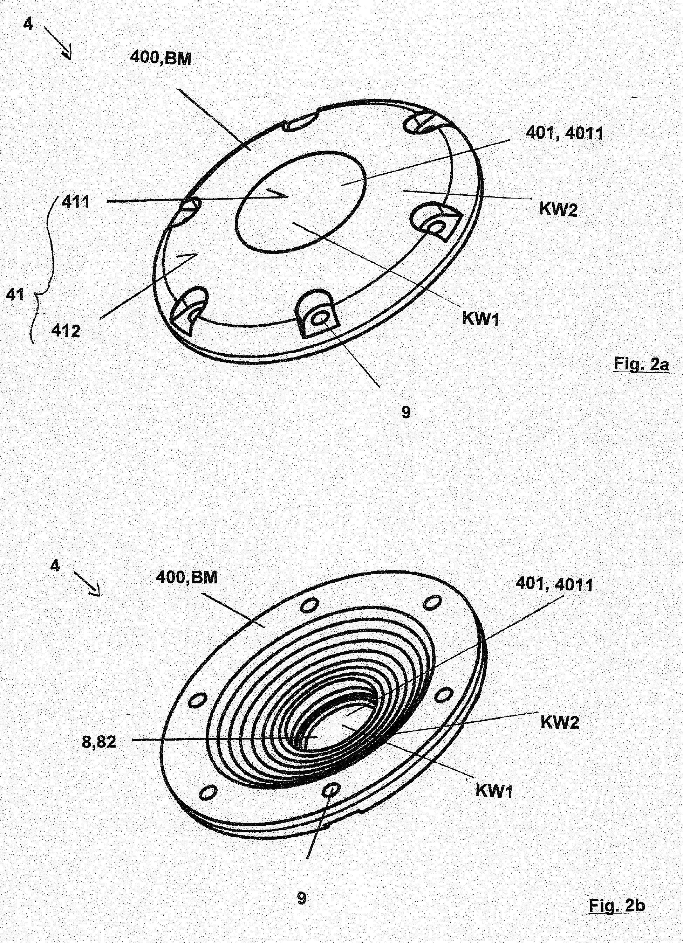

Im Folgenden wird anhand der Fig. 2a und Fig. 2b die Schutzabdeckung 4 für den Fall eines kapazitiven Sensors 2 in Form eines Dickensensors noch etwas detaillierter beschrieben. Die Fig. 2a ist dabei eine Ansicht der Kontaktfläche 41 einer erfindungsgemässen Schutzabdeckung 4, während Fig. 2b eine Ansicht auf die Sensorsektion der Schutzabdeckung gemäss Fig. 2a zeigt. Dabei kann diese Variante einer erfindungsgemässen Schutzabdeckung selbstverständlich auch für andere Sensoren 2 verwendet werden. Voraussetzung ist, dass die physikalisch gemessene Grösse durch die Schutzkappe 4 nicht zu stark verändert wird, bzw. höchstens in reproduzierbarer Weise verändert wird, wie weiter oben ausführlich erläutert wurde.

Damit ein kapazitiver Sensor 2 durch die als Schutzkappe ausgestaltete Schutzabdeckung 4 hindurch die Dicke der darüber gleitenden Folie 3 messen kann, sollte die Schutzabdeckung 4 im Bereich des Sensors 2 möglichst dünn sein. In der Praxis hat sich gezeigt, dass noch eine genügende mechanische Festigkeit der Schutzabdeckung 4 erreicht wird, wenn noch eine Dicke der Schutzabdeckung 4 im Bereich des Sensors 2 von ca. 0.5 - 0.6 mm vorhanden ist. In der Praxis heisst das in der Regel, dass der Messkörper 401 eine Dicke von mindestens ca. 0.5 mm haben sollte. Die Schutzabdeckung sollte dabei aus einem Material mit einer möglichst tiefen und möglichst temperaturunabhängigen relativen Permittivität bestehen. Das Material sollte auch Temperaturen bis ca. 130°C ertragen. Diese Eigenschaften können sicher mit Keramik oder Glaskeramik erreicht werden, eventuell auch mit Teflon oder im Speziellen auch mit anderen geeigneten Materialien.

Im Ausführungsbeispiel gemäss Fig. 2a bzw. Fig. 2b ist die Schutzabdeckung 4 zweiteilig, umfassend einen Grundkörper 400 aus einem Basismaterial BM und einem Messkörper 401 umfassend ein Messmaterial gefertigt. Das Basismaterial BM ist dabei eine elektrisch leitende Keramik KW2, während das Messmaterial des Messkörpers 401 aus einer elektrisch isolierenden Keramik KW1 gefertigt ist. Die Sensorsektion 8 ist hier als Ausnehmung in Form eines den Grundkörper 400 durchlaufenden zweiseitig offenen Kanals 82 in Form einer Durchgangsbohrung oder gestuften Durchgangsbohrung ausgebildet, in welcher der Messkörper 401 als Einsatzstück 4011 angeordnet ist. Da im Ausführungsbeispiel gemäss Fig. 2a bzw. Fig. 2b der Grundkörper bereits aus einem elektrisch leitenden Material, nämlich elektrisch leitende Keramik KW2 gefertigt ist, und der Messkörper 401 aus einem elektrisch isolierenden Material, nämlich elektrisch isolierende Keramik KW1 gefertigt ist, wird hier anders als im Ausführungsbeispiel der Fig. 1 keine weitere Beschichtung auf der Kontaktfläche 41 benötigt.

Gut zu erkennen sind die Befestigungslöcher 9, mit welchen die Schutzabdeckung 4 z.B. an einer Referenzfläche 6, wie in Fig. 1 schematisch gezeigt, befestigt werden kann, so dass der Sensor 2 zuverlässig und reproduzierbar in der Sensorsektion 8, 81, 82 angeordnet werden kann. Die in Fig. 2b sichtbaren umlaufenden Rillen sind produktionstechnisch bedingt und stammen aus einem Fräsprozess, mit welchem die Innere Form der Schutzabdeckung 4 ausgefräst wurde. Das heisst, in einem anderen Ausführungsbeispiel können solche Rillen auch fehlen, weil entweder ein Herstellungsprozess verwendet wurde, bei welchem solche Rillen erst gar nicht entstehen oder diese in einem weiteren Bearbeitungsschritt mit geeigneten Massnahmen entfernt wurden.

Damit die Schutzabdeckung 4 z.B. für eine Reinigung einfach entfernt und nachher wieder montiert werden kann, bevorzugt ohne dass das Messresultat des Sensors 2 verändert wird, kann die Schutzabdeckung 4 wie bereits erwähnt gemäss Fig. 1 zum Beispiel auf eine Fläche geschraubt werden, welche als Referenzfläche 6 von Sensor 2 und Schutzkappe betrachtet werden kann. Der als Dickenmesssensor ausgestaltete Sensor 2 ist bevorzugt so im Sensorgehäuse 5 befestigt, dass er ebenfalls auf die gleiche Referenzfläche 6 ausgerichtet ist.

Der Fachmann versteht sofort, dass die Reinigung einer abnehmbaren Schutzabdeckung 4 viel einfacher als diejenige einer ganzen Messeinrichtung 1 oder eines ungeschützten Sensors 2 bewerkstelligt werden kann. Die Reinigung der Schutzabdeckung 4 aus Keramik kann zum Beispiel mit Lösungsmitteln oder im Ultraschall-Bad erfolgen. Auch eine Sterilisierung ist möglich.

Insbesondere dann, wenn die Schutzabdeckung 4 leicht auszuwechseln ist und kostengünstig hergestellt werden kann, kann es auch sinnvoll sein, diese zumindest teilweise aus einem Material herzustellen, welches sehr gute Gleiteigenschaften und / oder sehr gute, d.h. im wesentlichen nicht störende dielektrische Eigenschaften hat, aber schnell abgenützt ist, wie zum Beispiel Teflon oder ein Metamaterial, das eventuell aber nicht zwingend auch gute Eigenschaften bezüglich Abrasion oder Gleiten haben kann.

Dabei versteht man unter einem Metamaterial eine künstlich hergestellte Struktur, deren Durchlässigkeit für elektrische und magnetische Felder (Permittivität εᵣ und Permeabilität µᵣ) von der in der Natur üblichen abweicht. Das wird erreicht durch speziell angefertigte, meist periodische, mikroskopisch feine Strukturen (Zellen, Einzelelemente) aus elektrisch oder magnetisch wirksamen Materialien in ihrem Inneren.

Insbesondere dann, wenn die Schutzabdeckung 4 leicht auszuwechseln ist und kostengünstig hergestellt werden kann, kann es sinnvoll sein, eine solche auch bei berührungslosen Messsystemen zu verwenden. Für den Aufbau eines Luftpolsters müssten dann durch die Berührungsfläche hindurch Austrittsöffnungen oder Poren geführt werden. Ein Auswechseln der Schutzkappe wäre dann möglich, wenn die Schutzkappe beschädigt ist oder wenn die Austrittsöffnungen oder Poren verstopft sind.

Die Form der als Gleitfläche ausgestalteten Kontaktfläche 41 der als Schutzkappe fungierenden Schutzabdeckung 4 kann so gewählt werden, dass die Kunststofffolie 3 überall mit ungefähr gleichem Druck auf die Berührungsfläche 41 anpresst. Da die Messeinrichtung 1 aber für sehr verschiedene Durchmesser von Folienblasen mit verschiedenem Innendruck verwendbar sein soll, wird bevorzugt eine Form gewählt, welche möglichst für alle Varianten verwendbar ist. Deshalb wird die Kontaktfläche 41 der Schutzabdeckung 4 vorzugsweise kugelförmig konvex gewölbt gewählt, in der Praxis häufig mit einem Kugelradius in der Grössenordnung von 50 mm bis 200 mm, vorzugsweise 115 mm.

Die Kontaktfläche 41 kann mit einer aus dem Stand der Technik an sich bekannten Beschichtung beschichtet sein, zum Beispiel mit Diamantartigem Kohlenstoff oder jeder anderen geeigneten Beschichtung, je nachdem ob die Oberfläche im Bereich der Ableitfläche 412 elektrisch leitend sein muss oder im Bereich der Messfläche 411 elektrisch isolierend sein muss. Zur Verminderung der Gleitreibung und der Verschmutzung kann aber auch Nanomaterial aufgebracht oder eingelagert werden. Es hat sich in vielen Fällen jedoch gezeigt, dass eine Gleitfläche aus Keramik schon genügend gute Eigenschaften hat, sodass eine Beschichtung nicht zwingend nötig ist.

Die Oberflächenstruktur der Kontaktfläche 41 darf nicht zu glatt sein, weil sonst die Kunststofffolie 3 schlecht gleitet oder sogar kleben bleiben kann. Sie darf auch nicht zu grob sein, weil die Folienoberfläche sonst zerkratzt wird. Die Strukturierung einer Keramik-Oberfläche mit einer Rauheit von Ra in der Grössenordnung von Ra = 0.4 µm bis Ra = 1.2 µm hat sich in vielen Fällen als ein guter Kompromiss erwiesen. Durch den Sinterungsprozess erhalten die einzelnen Körner dabei in der Regel automatisch eine Kugelform, was sich ebenfalls als sehr vorteilhaft herausgestellt hat.

Es versteht sich, dass die zuvor beschriebenen Ausführungsbeispiele der Erfindung je nach Anwendung auch in jeder geeigneten Weise kombinierbar sind und dass insbesondere die in der Zeichnung dargestellten speziellen Ausführungsbeispiele lediglich exemplarisch zu verstehen sind. Der Fachmann erkennt sofort einfache vorteilhafte Weiterbildungen der beschriebenen Ausführungsbeispiele der Erfindung und versteht, dass auch solche einfachen Weiterbildungen selbstverständlich von der Erfindung erfasst sind.

## Patentansprüche

1. Schutzabdeckung (4) zum Schutz eines Sensors (2) für die Bestimmung der Dicke einer Kunststofffolie (3), wobei die Schutzabdeckung (4) eine Sensorsektion (8, 81, 82) zur Aufnahme und Positionierung des Sensors (2) unter einer Kontaktfläche (41) der Schutzabdeckung (4) umfasst und die Kontaktfläche (41) derart an der Schutzabdeckung (4) vorgesehen ist, dass im Betriebszustand mittels des Sensors (2) die Dicke der Kunststofffolie (3) zumindest durch einen Teil der Kontaktfläche (41) hindurch bestimmbar ist, **dadurch gekennzeichnet, dass** die Kontaktfläche (41) eine elektrisch isolierende Messfläche (411) und eine elektrisch leitende Ableitfläche (412) umfasst, wobei die Messfläche (411) zumindest einen Teil der Sensorsektion (8, 81, 82) überdeckt.

2. Schutzabdeckung nach Anspruch 1, wobei die elektrisch isolierende Messfläche (411) eine zentrale elektrisch isolierende Messfläche (411) ist, und die elektrisch leitende Ableitfläche (412) eine in Bezug auf die zentrale elektrisch isolierende Messfläche (411), eine periphere elektrisch leitende Ableitfläche (412) ist.

3. Schutzabdeckung (4) nach Anspruch 1 oder 2, wobei die Schutzabdeckung (4) einen Grundkörper (400) aus einem Basismaterial (BM) und einen die elektrisch isolierende Messfläche (411) umfassenden Messkörper (401) aus einem Messmaterial umfasst.

4. Schutzabdeckung (4) nach einem der Ansprüche 1 bis 3, wobei zum Schutz des Sensors (2) gegen eine äussere Einwirkung im Betriebszustand, insbesondere zum Schutz des Sensors (2) gegen einen abrasiven Verschleiss und / oder gegen eine Verschmutzung, die Schutzabdeckung (4) ein widerstandsfähiges Schutzmaterial umfasst, insbesondere ein keramisches Material (KW, KW1, KW2), vorzugsweise eine Sinterkeramik oder Glaskeramik, oder Teflon, oder ein Metamaterial umfasst.

5. Schutzabdeckung (4) nach einem der Ansprüche 3 oder 4, wobei das Basismaterial (BM) des Grundkörpers (400) ein elektrisch leitendes Material, insbesondere ein elektrisch leitendes keramisches Material (KW2) umfasst und / oder wobei das Messmaterial des Messkörpers (401) ein elektrisch isolierendes Material, insbesondere ein elektrisch isolierendes keramisches Material (KW1) umfasst.

6. Schutzabdeckung (4) nach einem der Ansprüche 3 bis 5, wobei die Sensorsektion (8, 81, 82) zur Aufnahme des Sensors (2) in Form einer Ausnehmung (81, 82) im Grundkörper (400) vorgesehen ist, insbesondere in Form eines einseitig geschlossenen Sacklochs (81) oder in Form eines den Grundkörper (400) durchlaufenden zweiseitig offenen Kanals (82), im Speziellen als Durchgangsbohrung ausgebildet ist.

7. Schutzabdeckung (4) nach einem der Ansprüche 3 bis 6, wobei der Messkörper (401) als Einsatzstück (4011) in der Sensorsektion (8, 81, 82), insbesondere als Einsatzstück (4011) am oder im durchlaufenden zweiseitigen offenen Kanal (82) ausgebildet ist.

8. Schutzabdeckung (4) nach einem der Ansprüche 3 bis 7, wobei die elektrisch leitende Ableitfläche (412) in Form einer elektrisch leitenden Beschichtung auf dem Grundkörper (400) ausgebildet ist.

9. Schutzabdeckung (4) nach einem der vorangehenden Ansprüche, wobei die Schutzabdeckung (4) insgesamt, und / oder das Basismaterial (BM), und / oder das Messmaterial des Messkörpers (401), und / oder die elektrisch isolierende Beschichtung, und / oder die elektrisch leitende Beschichtung, und / oder das keramische Material (KW, KW1, KW2) eine relative Permittivität von kleiner als 10, bevorzugt von kleiner als 6, besonders bevorzugt zwischen 1 und 4 hat und / oder wobei die relative Permittivität im Temperaturbereich von 20°C bis mindestens 100°C, in Speziellen bis ca. 200°C im wesentlichen temperaturunabhängig ist.

10. Schutzabdeckung (4) nach einem der vorangehenden Ansprüche, wobei der Sensor (2) ein optischer, oder ein radiometrischer Sensor (2), besonders bevorzugt ein dielektrischer Sensor (2), im Speziellen ein kapazitiver Sensor (2) zur Messung der Dicke der Kunststofffolie (3) ist.

11. Schutzabdeckung (4) nach einem der vorangehenden Ansprüche, wobei zur Erzeugung eines möglichst gleichmässigen Anpressdrucks in einem Berührungsbereich zwischen der Kontaktfläche (41) und der Kunststofffolie (3), die Kontaktfläche (41) in Bezug auf die Sensorsektion (8, 81, 82) zumindest abschnittsweise konvex, bevorzugt kugelförmig ausgestaltet ist und / oder wobei zumindest die Messfläche (411), insbesondere die zentrale Messfläche (411) einen kleineren gleichen oder grösseren Krümmungsradius als die Ableitfläche (412), insbesondere periphere Ableitfläche (412) aufweist.

12. Schutzabdeckung (4) nach einem der vorangehenden Ansprüche, wobei zur Minimierung eines Reibungswiderstands die Kontaktfläche (41) zumindest in einem Berührungsbereich eine strukturierte Oberfläche aufweist, die vorzugsweise eine kugelförmige Feinstruktur mit einer Rauheit in der Grössenordnung von Ra = 0.4 µm bis Ra = 1.2 µm aufweist.

13. Schutzabdeckung (4) nach einem der vorangehenden Ansprüche, wobei die Schutzabdeckung zum Austausch und / oder zur Reinigung und / oder zur Sterilisierung derart ausgestaltet ist, dass die Schutzabdeckung (4) mit dem Sensor (2) lösbar verbindbar ist, wobei nach einem Austausch der Schutzabdeckung eine Neukalibrierung der Messvorrichtung (1) bevorzugt vermeidbar ist.

14. Schutzabdeckung nach einem der vorangehenden Ansprüche, wobei zur Erzeugung einer schmutzabstossenden Oberfläche die Kontaktfläche (41) Nanopartikel umfasst, die bevorzugt auf die Kontaktfläche (41) aufgebracht und / oder eingelagert sind.

15. Messeinrichtung (1) umfassend eine Schutzabdeckung (4) und einen Sensor (2) nach einem der vorangehenden Ansprüche.

## Claims

1. A protective cover (4) for protecting a sensor (2) for determining the thickness of a plastic film (3), wherein the protective cover (4) comprises a sensor section (8, 81, 82) for receiving and positioning the sensor (2) under a contact surface (41) of the protective cover (4), and the contact surface (41) is provided on the protective cover (4) in such a way that, in the operating state, the thickness of the plastic film (3) can be determined by means of the sensor (2) through at least a part of the contact surface (41), **characterized in that** the contact surface (41) comprises an electrically insulating measuring surface (411) and an electrically conductive deflecting surface (412), the measuring surface (411) covering at least a part of the sensor section (8, 81, 82).

2. A protective cover according to claim 1, wherein the electrically insulating measuring surface (411) is a central electrically insulating measuring surface (411), and the electrically conductive deflecting surface (412) is a peripheral electrically conductive deflecting surface (412) with respect to the central electrically insulating measuring surface (411).

3. A protective cover (4) according to claim 1 or 2, wherein the protective cover (4) comprises a base body (400) of a base material (BM) and a measuring body (401) of a measuring material comprising the electrically insulating measuring surface (411).

4. A protective cover (4) according to anyone of the claims 1 to 3, wherein the protective cover (4) comprises a resistant protective material, in particular a ceramic material (KW, KW1, KW2), preferably a sintered ceramic or glass ceramic, or Teflon, or a metamaterial, for protecting the sensor (2) against an external effect in the operating state, in particular for protecting the sensor (2) against abrasive wear and/or against contamination.

5. A protective cover (4) according to anyone of the claims 3 or 4, wherein the base material (BM) of the base body (400) comprises an electrically conductive material, in particular an electrically conductive ceramic material (KW2) and/or wherein the measuring material of the measuring body (401) comprises an electrically insulating material, in particular an electrically insulating ceramic material (KW1).

6. A protective cover (4) according to anyone of the claims 3 to 5, wherein the sensor section (8, 81, 82) for receiving the sensor (2) is provided in the form of a recess (81, 82) in the base body (400), in particular being designed in the form of a blind hole (81) closed on one side or in the form of a channel (82) open on two sides traversing the base body (400), in particular in the form of a through bore.

7. A protective cover (4) according to anyone of the claims 3 to 6, wherein the measuring body (401) is designed as an insert piece (4011) in the sensor section (8, 81, 82), in particular as an insert piece (4011) on or in the traversing two-sided open channel (82).

8. A protective cover (4) according to anyone of the claims 3 to 7, wherein the electrically conductive deflecting surface (412) is designed in the form of an electrically conductive coating on the base body (400).

9. A protective cover (4) according to anyone of the preceding claims, wherein the protective cover (4) in total, and/or the base material (BM), and/or the measuring material of the measuring body (401), and/or the electrically insulating coating, and/or the electrically conductive coating, and/or the ceramic material (KW, KW1, KW2) has a relative permittivity of less than 10, preferred of less than 6, particularly preferred between 1 and 4 and/or wherein the relative permittivity is substantially temperature-independent in the temperature range from 20°C to at least 100°C, in particular up to about 200°C.

10. A protective cover (4) according to anyone of the preceding claims, wherein the sensor (2) is an optical or a radiometric sensor (2), particularly preferred a dielectric sensor (2), especially a capacitive sensor (2) for measuring the thickness of the plastic film (3).

11. A protective cover (4) according to anyone of the preceding claims, wherein, in order to generate a contact pressure which is as uniform as possible in a contact region between the contact surface (41) and the plastic film (3), the contact surface (41) is designed convex, preferably spherical, at least in sections with respect to the sensor section (8, 81, 82) and/or wherein at least the measuring surface (411), in particular the central measuring surface (411), has a smaller, equal or larger radius of curvature than the deflecting surface (412), in particular the peripheral deflecting surface (412).

12. A protective cover (4) according to anyone of the preceding claims, wherein for minimizing a frictional resistance, the contact surface (41) has, at least in a contact region, a structured surface which preferably has a spherical fine structure with a roughness in the order of Ra = 0.4 µm to Ra = 1.2 µm .

13. A protective cover (4) according to anyone of the preceding claims, wherein the protective cover is designed for replacement and/or cleaning and/or sterilization in such a way that the protective cover (4) can be detachably connected to the sensor (2), a recalibration of the measuring device (1) preferably being avoidable after replacement of the protective cover.

14. A protective cover (4) according to anyone of the preceding claims, wherein, to produce a dirt-repellent surface, the contact surface (41) comprises nanoparticles, which are preferably applied to the contact surface (41) and/or are embedded.

15. A measuring device (1) comprising a protective cover (4) and a sensor (2) according to anyone of the preceding claims.

## Revendications

1. Un couvercle de protection (4) pour protéger un capteur (2) pour déterminer l'épaisseur d'un film plastique (3), dans lequel le couvercle de protection (4) comprend une section de capteur (8, 81, 82) pour recevoir et positionner le capteur (2) sous une surface de contact (41) du couvercle de protection (4) et la surface de contact (41) est prévue sur le couvercle de protection (4) de telle sorte, que, à l'état de fonctionnement, l'épaisseur du film plastique (3) peut être déterminée au moyen du capteur (2) à travers au moins une partie de la surface de contact (41), **caractérisé en ce que** la surface de contact (41) comprend une surface de mesure électriquement isolante (411) et une surface déflectrice électriquement conductrice (412), la surface de mesure (411) recouvrant au moins une partie de la section de capteur (8, 81, 82).

2. Un couvercle de protection selon la revendication 1, dans lequel la surface de mesure électriquement isolante (411) est une surface de mesure centrale électriquement isolante (411), et la surface déflectrice électriquement conductrice (412) est une surface déflectrice périphérique électriquement conductrice (412) par rapport à la surface de mesure centrale électriquement isolante (411).

3. Un couvercle de protection (4) selon la revendication 1 ou 2, dans lequel le couvercle de protection (4) comprend un corps de base (400) en un matériau de base (BM) et un corps de mesure (401) en un matériau de mesure comprenant la surface de mesure électriquement isolante (411).

4. Un couvercle de protection (4) selon l'une des revendications 1 à 3, dans lequel le couvercle de protection (4) comprend un matériau de protection résistant, en particulier un matériau céramique (KW, KW1, KW2), de préférence une céramique frittée ou une vitrocéramique ou du téflon, ou un métamatériau, pour protéger le capteur (2) contre un effet externe dans l'état de fonctionnement, en particulier pour protéger le capteur (2) contre une usure abrasive et/ou contre une contamination.

5. Un couvercle de protection (4) selon l'une des revendications 3 ou 4, dans lequel le matériau de base (BM) du corps de base (400) comprend un matériau électriquement conducteur, en particulier un matériau céramique électriquement conducteur (KW2) et/ou dans lequel le matériau de mesure du corps de mesure (401) comprend un matériau électriquement isolant, en particulier un matériau céramique électriquement isolant (KW1).

6. Un couvercle de protection (4) selon l'une des revendications 3 à 5, dans lequel la section de capteur (8, 81, 82) pour recevoir le capteur (2) est prévue sous la forme d'un évidement (81, 82) dans le corps de base (400), en particulier sous la forme d'un trou borgne (81) fermé d'un côté ou sous la forme d'un canal (82) ouvert des deux côtés traversant le corps de base (400), en particulier sous la forme d'un alésage traversant.

7. Un couvercle de protection (4) selon l'une des revendications 3 à 6, dans lequel le corps de mesure (401) est conçu comme une pièce d'insertion (4011) dans la section de capteur (8, 81, 82), en particulier comme une pièce d'insertion (4011) sur ou dans le canal ouvert des deux côtés traversant (82).

8. Un couvercle de protection (4) selon l'une des revendications 3 à 7, dans lequel la surface déflectrice électriquement conductrice (412) est conçue sous la forme d'un revêtement électriquement conducteur sur le corps de base (400).

9. Un couvercle de protection (4) selon l'une des revendications précédentes, dans lequel le couvercle de protection (4) au total et/ou le matériau de base (BM) et/ou le matériau de mesure du corps de mesure (401) et/ou le revêtement électriquement isolant et/ou le revêtement électriquement conducteur et/ou le matériau céramique (KW, KW1, KW2) a/ont une permittivité relative inférieure à 10, de préférence inférieure à 6, en particulier de préférence entre 1 et 4 et/ou dans lequel la permittivité relative est sensiblement indépendante de la température dans la plage de température de 20°C à au moins 100°C, en particulier jusqu'à environ 200°C.

10. Un couvercle de protection (4) selon l'une des revendications précédentes, dans lequel le capteur (2) est un capteur optique ou radiométrique (2), en particulier de préférence un capteur diélectrique (2), en particulier un capteur capacitif (2) pour mesurer l'épaisseur du film plastique (3).

11. Un couvercle de protection (4) selon l'une des revendications précédentes, dans lequel, pour générer une pression de contact aussi uniforme que possible dans une zone de contact entre la surface de contact (41) et le film plastique (3), la surface de contact (41) est conçue convexe, de préférence sphérique, au moins en sections par rapport à la section du capteur (8, 81, 82) et/ou dans lequel au moins la surface de mesure (411), en particulier la surface de mesure centrale (411), présente un rayon de courbure inférieur, égal ou supérieur à la surface déflectrice (412), en particulier la surface déflectrice périphérique (412).

12. Un couvercle de protection (4) selon l'une des revendications précédentes, dans lequel, pour minimiser une résistance au friction, la surface de contact (41) présente, au moins dans une zone de contact, une surface structurée qui présente de préférence une structure fine sphérique avec une rugosité dans l'ordre de Ra = 0,4 µm à Ra = 1,2 µm.

13. Un couvercle de protection (4) selon l'une des revendications précédentes, dans lequel le couvercle de protection est conçu pour le remplacement et/ou le nettoyage et/ou la stérilisation de telle sorte que le couvercle de protection (4) peut être relié de manière amovible au capteur (2), un réétalonnage du dispositif de mesure (1) pouvant de préférence être évité après remplacement du couvercle de protection.

14. Un couvercle de protection (4) selon l'une des revendications précédentes, dans lequel, pour produire une surface anti-salissures, la surface de contact (41) comprend des nanoparticules, qui sont de préférence appliquées sur la surface de contact (41) et/ou sont enrobées.

15. Un dispositif de mesure (1) comprenant un couvercle de protection (4) et un capteur (2) selon l'une des revendications précédentes.
